# EUROPEAN PATENT SPECIFICATION

(11) **EP 0 629 461 B1**
(45) Date of publication and mention of the grant of the patent: **25.11.1998**
(21) Application number: 93401550.4
(22) Date of filing: 16.06.1993
(51) Int. Cl.: B23D 31/04

(54) **Treatment device for lug scrap strips from metallic strip slitters**
Bearbeitungsvorrichtung für den Besäumungsstreifen einer Bandschlitzmaschine
Appareil de traitement des chutes de rive d'un refendeur de bande

(43) Date of publication of application: 21.12.1994
(73) Proprietor: Furukawa Aluminum Co., Ltd., Tokyo 100 (JP)
(72) Inventor: Aiba, Junichi, c/o The Furukawa Aluminum Co.,Ltd., Tokyo (JP); Sasaki, Yoshiharu, The Furukawa Aluminum Co.,Ltd., Tokyo (JP)
(74) Representative: Lanceplaine, Jean-Claude

(56) References cited:
- DE-A- 3 840 598
- DE-A- 4 021 573
- DE-C- 1 125 259
- GB-A- 2 180 483
- DATABASE WPI Week 8822, Derwent Publications Ltd., London, GB; AN 88-153782 &

## Description

### BACKGROUND OF THE INVENTION

### Field of the Invention:

This invention relates to a treatment device for treating lug scrap strips produced by the slit of metallic strips, in a metallic strip slitter for removing the lug scrap strips either by generally slitting a wide metallic strip into a plurality of narrow metallic strips by means of slitter knives, or slitting the wide metallic strip lugs on both sides on the way of allowing the wide metallic strips to be driven while continuously delivering the metallic strips. More specifically, it relates to a lug scrap strip treating device which is suitable to such a metallic strip slitter as used for thinner metallic strips as its object.

### Description of the Prior Art:

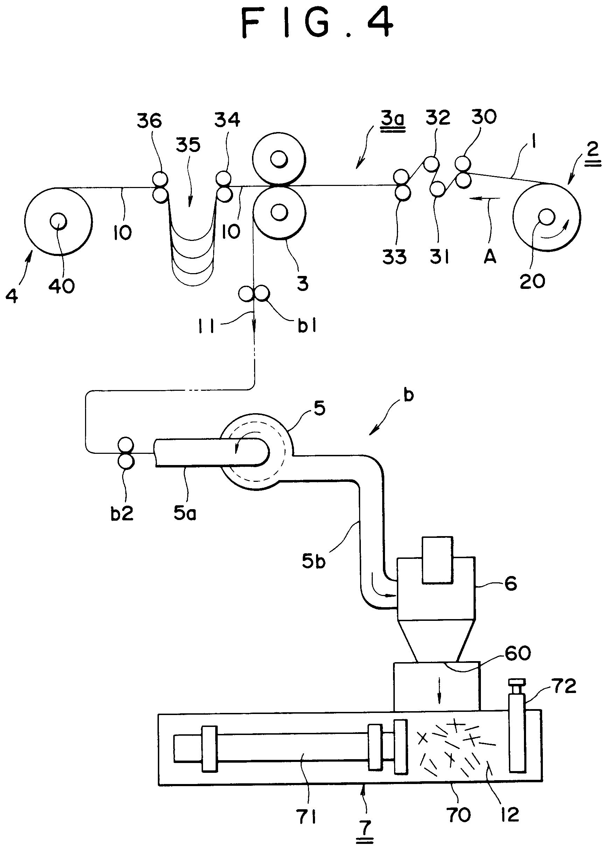

Referring to Figs. 4 through 6, a treatment device for lug scrap strips in a metallic strip slitter of the prior art will be explained.

A wide and thin metallic strip 1 (e.g., aluminum or its alloy having a thickness of 0.4 mm or less) rolled on a core 20 of an uncoiler 2 in a form of coil is continuously delivered by a pair of pinch rollers 30 in the arrow direction indicated by A against the line of a slitter 3a. Subsequently, the metallic strip 1 is made flat while being guided by guide rollers 31 and 32 in a S-letter form. Then, the metallic strip 1 is guided by another pair of pinch rollers 33 into between slitter knives 3.

The metallic strip 1 is slit by the slitter knives 3 and divided into a plurality of narrow metallic strips 10 as a product and lug scrap strips 11 on both sides, respectively.

The metallic strips 10 as a product are passed through a pair of pinch rollers 34, a loop pit 35 and another pair of pinch rollers 36, and then rolled round a core 40 of a coiler 4.

On the other hand, the resulting lug scrap strips 11 are guided to an air-operated duct 5a in a lug scrap strip treatment device b by other pinch rollers b1 and b2, and then cut and crushed by a blower 5 having a crusher structure.

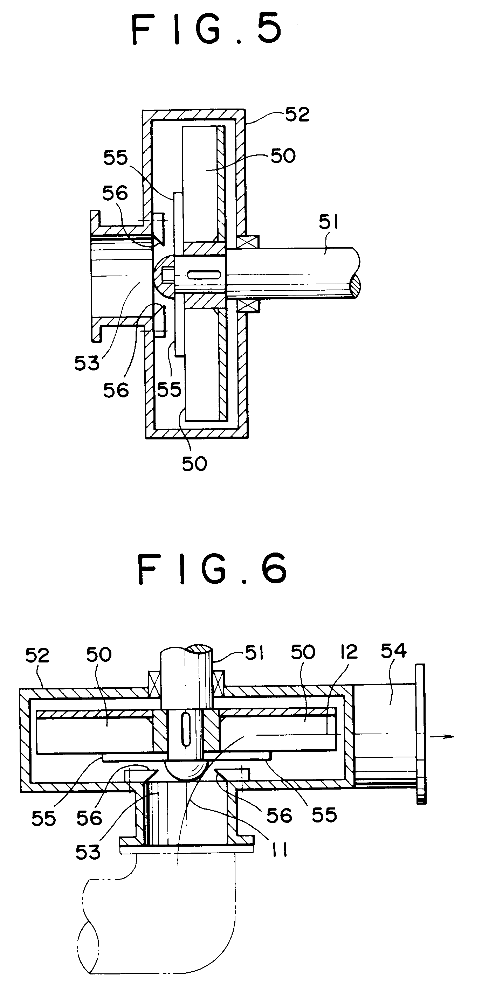

As shown in Figs. 5 and 6, the blower 5 comprises: a rotating blade 50 radially mounted on the end of a rotating shaft 51; a casing 52 for accommodating the rotating blade 50 and rotatably supporting the rotating shaft 51; an admission port 53 formed in the casing 52 so as to face to the rotating blade 50; and an exhaust port 54 formed in the casing 52 so as to extend in the direction of rotation of the rotating blade 50.

Since cutting portions 55 for crushing and fixed cutting portions 56 are attached to the rotating blade 50 and the admission port 53 of the casing 52, respectively, a long lug scrap strip 11 sucked from the admission port 53 is crushed and deformed by these cutting portions 55 and 56. The resulting crushed pieces 12 are passed through the air-operated duct 5b shown in Fig. 4, supplied to a cyclone type scrap collector 6 and then released into an accommodation chamber 70 of a scrap press 7 provided under an exhaust port 60 in the lower portion of the scrap collector 6.

If the crushed pieces 12 within the accommodation chamber 70 reach a predetermined quantity or more, the crushed pieces 12 are pressed by a press 71 rightwards in the drawing to be formed into a mass, and thereafter taken out by opening a gate 72.

In the lug scrap strip treatment device b of the prior art described above, the long lug scrap strip 11 is crushed by the blower 5 having a crusher structure, and the cut and crushed pieces 12 are extremely unequal in length. Hence, there is a problem in that the crushed pieces 12 cut in longer sizes than the minimum inner diameter of the air-operated duct 5b at the rear of the blower 5 are easily caught by the internal surfaces of the air-operated duct 5b and the exhaust port 60 of the scrap collector 6, and a majority of troubles are caused by the plugging-up of the scrap strip pieces in the air-operated duct 5b and the scrap collector 6.

The troubles due to the plugging-up of the scrap strip pieces particularly happen more often when the metallic strip 1 is thick than when it is thin.

### SUMMARY OF THE INVENTION

It is an object of the present invention to provide a lug scrap strip treatment device having no trouble due to the plugging up caused by the lug scrap strip pieces on the way of the scrap treatment line by cutting a long lug scrap strip forwarded from a slitter line into pieces as equally as possible in length.

Another object of the present invention is to provide a lug scrap strip treatment device which can readily adjust the cut length of the lug scrap strip to such lengths as not to cause the plugging-up by the scrap strip pieces in the subsequent scrap treatment line.

For accomplishing the objects described above, a lug scrap strip treatment device of the present invention comprises: an air-operated duct for guiding a long lug scrap strip; a scrap cutter provided on the way of the air-operated duct and for continuously cutting the lug scrap strip at a predetermined period; a blower installed at the rear of the scrap cutter on the way of the air-operated duct; a scrap collector provided at the end of the air-operated duct; and a scrap press attached to the scrap collector, wherein the driving of the scrap cutter is controlled on the basis of the line speed in the metallic strip slitter, said scrap cutter including: a rotor having one or a plurality of rotary cutting portions provided on the outer periphery of the scrap cutter in parallel with a rotating shaft center a casing having a supply port and an exhaust port provided in the flow direction of the air-operated duct and for rotatably accommodating the rotor under the condition that the rotary cutting portion intersects the flow direction of the air-operated duct and a fixed cutting portion provided on the side of the supply port of the casing under the condition that the rotary cutting portions are opposed to and brought into contact with the fixed cutting portion repeatedly or in close proximity to the fixed cutting portion by the rotation of the rotor, and the rotation of said rotor is controlled on the basis of the line speed of said metallic slitter.

According to the lug scrap strip treatment device of the present invention, a lug scrap strip is slit from a wide metallic strip by a slitter knife, then guided to the air-operated duct and supplied to the scrap cutter at first. Since the scrap cutter continuously cuts the lug scrap strip at a predetermined period and the driving of the scrap cutter is controlled on the basis of the line speed of the slitter, the lug scrap strip is cut in an approximately constant length by the scrap cutter. The cut lug scrap strip pieces are transformed by the blower on the way while being transferred by the air stream along the air-operated duct. Thereafter, the resultant lug scrap strip pieces are passed through the scrap collector and then supplied to the scrap press. When a predetermined quantity of such lug scrap strip pieces are collected, these lug scrap strip pieces are pressed by the scrap press to be formed into a mass.

As described above, the long lug scrap strips are cut in an approximately constant length by the scrap cutter, and therefore, the lug scrap strip pieces are never caught on the way of the lug scrap strip treatment line and any plugging-up is not caused by the lug scrap strip pieces.

As described above, in case where the scrap cutter comprises: a rotor having one or a plurality of rotary cutting portions provided on the outer periphery of the rotor in parallel with a rotating shaft center; a casing having a supply port and an exhaust port provided in the stream direction of the air-operated duct and for rotatably accommodating the rotor under the condition that the rotary cutting portion intersects the flow direction of the air-operated duct; and a fixed cutting portion provided on the side of the supply port of the casing under the condition that the rotary cutting portions are opposed to and brought into contact with the fixed cutting portion repeatedly or in close proximity to the fixed cutting portion by the rotation of the rotor, the lug scrap strips is cut in an approximately constant length by the rotary cutting portions of the rotor rotating in synchronization with the line speed of the slitter and by the fixed cutting portion.

The cut length of the lug scrap strip can arbitrarily be set depending on how much the driving control of the scrap cutter is allowed to synchronize with the line speed of the metallic strip slitter. Therefore, it is extremely easy to set the cut length of the lug scrap strip to some degrees that no plugging-up may be caused by the scrap strip pieces on the way of the scrap treatment line at the rear of the scrap cutter.

The lug scrap strip treatment device of the present invention is not restricted only to the preferred embodiment as will be disclosed thereafter.

### BRIEF DESCRIPTION OF THE DRAWINGS

The foregoing and other objects and features of the invention will become apparent from the following description of the preferred embodiment of the invention with reference to the accompanying drawings, in which:
Fig. 1 is a side view, partly omitted, showing a line of a metallic strip slitter using a lug scrap strip treatment device as a preferred embodiment of the present invention;
Fig. 2 is a side sectional view showing a scrap cutter used in the lug scrap strip treatment device of Fig. 1;
Fig. 3 is a plan cross-sectional view showing the scrap cutter of Fig. 2;
Fig. 4 is a schematic side view showing a line of a metallic strip slitter using a lug scrap strip treatment device of the prior art;
Fig. 5 is a longitudinal cross-sectional view showing a blower used in the lug scrap strip treatment device of Fig. 4; and
Fig. 6 is a plan cross-sectional view showing the blower of Fig. 5.

### DETAILED DESCRIPTION OF THE EMBODIMENT

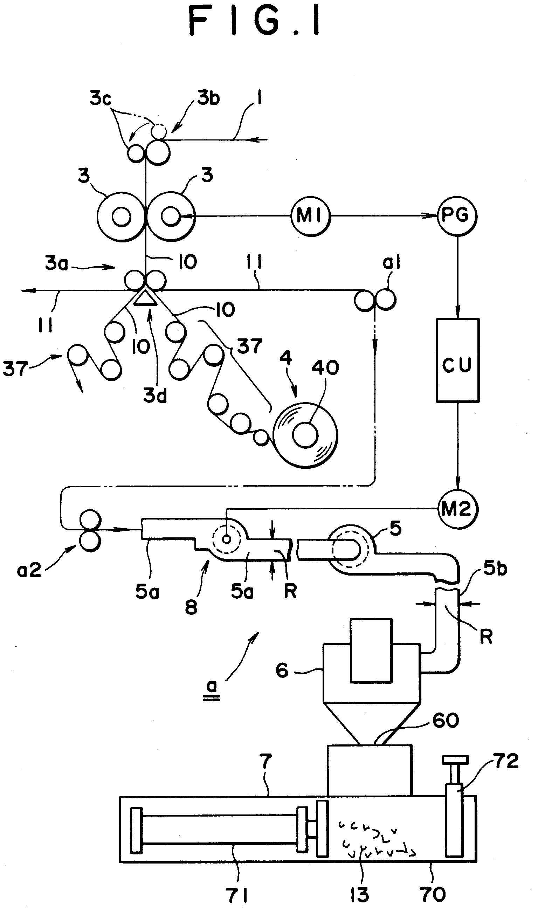

Referring now to Figs. 1 through 3, the detailed description of the lug scrap strip treatment device of a metallic strip slitter will be given as a preferred embodiment of the present invention.

In the following preferred embodiment, the same part names and the corresponding symbols will be used, which are used in those of the prior art, so long as there is no problem in using.

A wide metallic strip 1 delivered from an uncoiler (not shown) into the line of a slitter 3a is pinched between a pair of pinch rollers 3b and 3c while being guided by a guide (not shown), and then pinched between slitter knives 3 provided at the lower portion of the pinch rollers.

When the tip end of the metallic strip 1 is pinched between the pair of pinch rollers 3b and 3c, the upper roller 3c is shifted from the condition indicated by a chain double-dashed line to that by a solid line shown in Fig. 1, and the metallic strip 1 is guided between the slitter knives 3 by turning the advancing direction of the metallic strip 1 to its lower direction.

The wide metallic strip 1 is slit by the slitter knives 3 and divided into a plurality of narrow metallic strips 10 and lug scrap strips 11 on both sides.

Each metallic strip 10 after being slit is distributed by a distributing unit 3d into the right and left sides so as to set the mutually adjacent strips in an alternative manner with each other, and then travels while being guided by a guide roller group 37 to be rolled round the core 40 of the coiler 4.

On the other hand, the lug scrap strips 11 on both sides are separated from the metallic strips 10 by the portion of the distributing unit 3d and simultaneously distributed in the right and left sides to be guided by a pair of pinch rollers a1 and a2 to an air-operated duct 5a of a lug scrap strip treatment device a in this preferred embodiment.

Since the peripheral speed of the pair of pinch rollers a1 and a2 on the way to the air-operated duct 5a is synchronized with the peripheral speed of the slitter knife 3, the lug scrap strip 11 is transferred to the air-operated duct 5a while synchronizing with the line speed of slitter 3a.

The lug scrap strip treatment device a comprises: an air-operated duct 5a, to which the lug scrap strips 11 produced by the slit of the slitter knives 3 are supplied; a scrap cutter 8 constituted so as to cut the lug scrap strips at a predetermined period on the way to the air-operated duct 5a; a blower 5 installed in succession to the scrap cutter 8; a cyclone type scrap collector 6 installed at the end of the air-operated duct 5b; and a scrap press 7 attached to the lower portion of the scrap collector 6.

The driving of the scrap cutter 8 is constituted so as to be controlled on the basis of the line speed in the metallic strip slitter 3a.

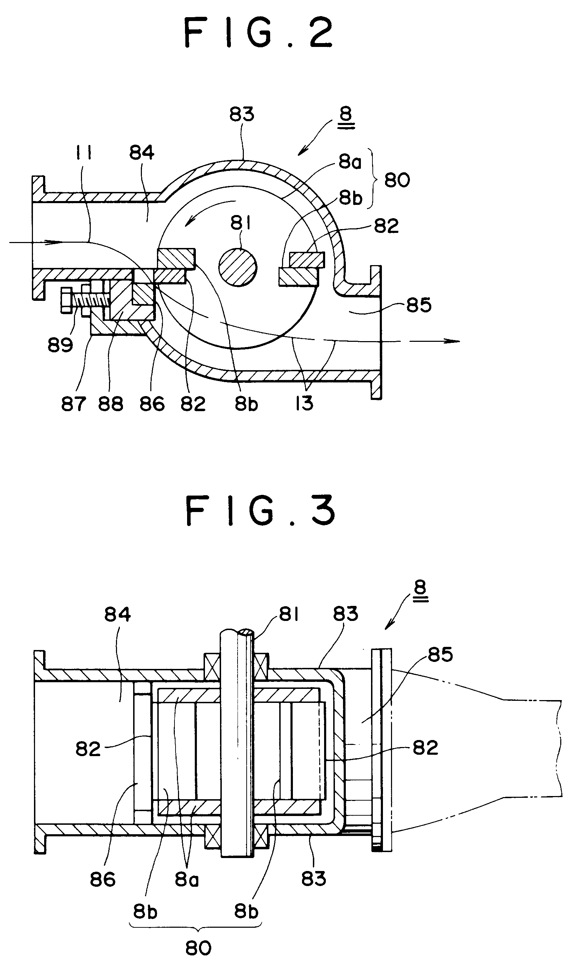

As shown in Figs. 2 and 3, the scrap cutter 8 in this preferred embodiment comprises: a rotor 80 having two rotary cutting portions 82 provided on the external circumference in parallel with a rotary shaft 81 at an interval of 180°; a casing 83 having a supply port 84 and an exhaust port 85 provided along the flow direction of the air-operated duct 5a and for rotatably accommodating the rotor 80 so that each rotary cutting portion 82 intersects the flow direction of the air-operated duct 5a; and a fixed cutting portion 86 provided on the side of the supply port 84 of the casing 83 so that the rotary cutting portions 82 are opposed to and brought into contact with the fixed cutting portion 86 repeatedly by the rotation of the rotor 80. Due to the counterclockwise rotation of the rotor 80 in Fig. 2, the lug scrap strip 11 is cut in predetermined short lengths by the fixed cutting portion 86 and the rotary cutting portions 82 to give lug scrap strip pieces 13.

The rotor 80 comprises two sheets of disks 8a fixed to the rotary shaft 81 and connection plates 8b for interconnecting the external circumferences of the disks 8a. The rotor 80 fixes each rotary cutting portion 82 to its plane in the rotating direction of each connection plate 8b.

The fixed cutting portion 86 is provided on the lower edge of the internal side of the supply port 84 so as to intersect the air flow direction, as shown in Fig. 2. In this embodiment, a support member 88 is fixed to a pocket 87 provided so as to expand toward the lower portion of the supply port 84, and the fixed cutting portion 86 is fixed to this support member 88. Furthermore, when each rotary cutting portion 82 or the fixed cutting portion 86 is worn off, the fixed cutting portion 86 can be pushed inward together with the support member 88 while tightening a screw 89 by fixing the support member 88 to the inside of the pocket 87 by the screw 89 from an exterior thereof.

In this preferred embodiment, the driving of the scrap cutter 8 is set to be controlled by the line speed of the slitter 3a by constituting as follows:

Namely, as shown in Fig. 1, the revolving speed of a motor M1 for driving the slitter knife 3 is detected by, for example, a revolving speed sensor PG composed of a pulse generator and the resulting detected value is input to a control unit CU. Then, the peripheral speed of the slitter knife 3 is calculated from both the value detected by the revolving speed sensor PG and the outer diameter of the slitter knife 3, and this calculated value is used as a line speed to control a motor M2 of the rotor 80 in the scrap cutter 8 by the control unit CU.

Specifically, the minimum inner diameter R of the air-operated ducts 5a and 5b following the scrap cutter 8 in Fig. 1 is approximately 200 mm in this preferred embodiment, and therefore, the motor M2 is controlled so that the rotor 80 is rotated in synchronization with the peripheral speed of the slitter knife 3, which is equal to the line speed of the slitter 3a. Accordingly, the length of each lug scrap strip piece in Fig. 2 resulting from cutting the lug scrap strips 11 by the scrap cutter 8 is always arranged to be not more than 200 mm.

The slitter knife 3 in this preferred embodiment is two pairs of rotary cutting portions having edges brought into contact with each other while rotating in synchronization with each other, but it may be good to calculate either one of the peripheral speeds thereof as a line speed for controlling the rotor 80 of the scrap cutter 8.

The blower 5 used in this preferred embodiment has the approximately similar structure to that of the prior art as shown in Figs. 5 and 6, and therefore, any further explanation thereof is omitted. However, the blower 5 can be replaced with any ordinary blower having only rotary blades, instead of the blower of a crusher structure.

In accordance with the lug scrap strip treatment device a of this preferred embodiment, the lug scrap strip 11 continuously forwarded to the air-operated duct 5a shown in Fig. 1 is continuously cut in an approximately constant length (not more than 200 mm) by the scrap cutter 8. The cut lug scrap strip pieces 13 are transformed into a bent condition or other shapes so that the lug scrap strip pieces 13 readily intermingle with one another in case of being pressed as will be described later when passing through the blower 5 on the way when aerially transferred. Then, the transformed lug scrap strip pieces pass through the air-operated duct 5b, aerially transferred to the scrap collector 6, and fall down into the accommodation chamber 70 of the scrap press 7 from the exhaust port 60 of the scrap collector.

When the lug scrap strip pieces 13 in the accommodation chamber 70 reach a predetermined quantity, the exhaust port 60 of the scrap collector 6 is closed and the lug scrap strip pieces 13 are compressed by a press 71 in the right direction on Fig. 1 to be formed into each intermingled mass. The mass is taken out from the accommodation chamber 70 after opening the gate 72. After taking the mass out of the accommodation chamber 70, the press 71 and the gate 72 are allowed to return to an illustrated condition and the exhaust port 60 of the collector 6 is opened.

The device of this preferred embodiment has no plugging-up due to the scrap strip pieces and can not only smoothly treat the lug scrap strip by controlling the scrap cutter as described above but also set the cut length of each lug scrap strip piece in a predetermined length. The device is effective to the treatment of lug scrap strips, particularly in case of slitting thin metallic strips of not more than 0.15 mm at high speed.

In the device of this preferred embodiment, the scrap cutter 8 for cutting the lug scrap strips 11 by the rotary cutting portions 82 and the fixed cutting portion 86 is installed, but it may be possible to constitute the scrap cutter 8 by providing a movable cutting portion (not shown) moved upward and downward to the fixed cutting portion 86, instead of the rotary cutting portion 82. In brief, any specific constitution may be adopted so long as the scrap cutter 8 has such a structure as can continuously cut the delivered lug scrap strip 11 at a predetermined period.

A cyclone is applied to the collector 6, but instead of the cyclone, a hopper and some other things which can effectively collect the transferred lug scrap strip pieces 13 may be used.

## Claims

1. A treatment device for lug scrap strips from a metallic strip slitter comprising :
air-operated ducts (5a,5b) for guiding a long lug scrap strip (11) ;
a blower (5) on the way of said air-operated duct (5a) ;
a scrap collector (6) provided at the end of said air-operated duct (5b) ; and
a scrap press (7) attached to said scrap collector (6) ; characterized in that the device further comprises
a scrap cutter (8) ) for continuously cutting the lug scrap strip (11) at a predetermined period provided on the way of said air-operated duct (5a) and installed in front of said blower (5) ;
wherein the driving of said scrap cutter (8) is controlled on the basis of the line speed of a metallic strip sitter (3a), said scrap cutter (8) including a rotor (80) having one or a plurality of rotary cutting portions provided on the outer periphery (82) in parallel with a rotating shaft center ; a casing (83) having a supply port (84) and an exhaust port (85) along the flow direction of said air-operated ducts (5a ; 5b) and for rotatably accomodating said rotor (80) under the condition that said rotary cutting portions (82) intersect the flow direction of said air-operated ducts (5a ;5b) ; and a fixed cutting portion (86) provided on the side of said supply port (84) of said casing (83) under the condition that said rotary cutting portions (82) are opposed to and brought into contact with the fixed cutting portion repeatedly or in close proximity to the fixed cutting portion, and the rotation of said rotor (80) is controlled on the basis of the line speed of said metallic strip slitter (3a).

2. A treatment device for lug scrap strips from a metallic strip according to claim 1, wherein the rotation of said rotor (80) in said scrap cutter (8) is controlled on the basis of the peripheral speed of a cutter knife (3) in said metallic strip slitter (3a) so that the cut length of said lug scrap strip (11) comes to be not more than the minimum inner diameter of each of said air-operated ducts (5a, 5b) at the rear of said scrap cutter (8).

## Patentansprüche

1. Bearbeitungsvorrichtung für Besäumungsstreifen einer Metallband-Schlitzmaschine, bestehend aus:
luftdurchströmten Leitungen (5a, 5b) zum Führen eines langen Besäumungsstreifens (11);
einem Gebläse (5) im Bereich der luftdurchströmten Leitung (5a);
einem Abfallsammler (6) am Ende der luftdurchströmten Leitung (5b) und
einer Abfallpresse (7), die dem Abfallsammler (6) zugeordnet ist,
**dadurch gekennzeichnet,** daß die Vorrichtung weiterhin aufweist:
einen Zerschneider (8) zum kontinuierlichen Zerschneiden der Besäumungsstreifen (11) in vorbestimmter Periode im Bereich der luftdurchströmten Leitung (5a) vor dem Gebläse (5);
wobei der Antrieb des Zerschneiders (8) auf der Basis der Translations-Geschwindigkeit einer Metallband-Schlitzmaschine (3a) gesteuert wird, der Zerschneider (8) einen Rotor (80) mit einem rotierbaren Schneid-Teil oder mehreren an dessen äußerer Peripherie (82), parallel zum Rotationswellen-Zentrum angeordnet, aufweist, ein Gehäuse (83), eine Einströmmündung (84) und eine Auströmmündung (85) in Strömungsrichtung der luftdurchströmten Leitungen (5a, 5b) zur Aufnahme des Rotors (80) derart aufweist, daß die rotierbaren Schneid-Teile (82) die Strömung in den luftdurchströmten Leitungen (5a, 5b) unterteilt, ein festes Schneidteil (86) neben der Einströmmündung (84) des Gehäuses (83) derart vorgesehen ist, daß die rotierbaren Schneidteile (82) wiederholt dem festen Schneid-Teil gegenüber angeordnet sind und mit diesem in Kontakt treten oder dicht an diesem vorbei laufen und die Rotation des Rotors (80) auf der Basis der Translations-Geschwindigkeit der Metallband-Schlitzmaschine (3a) gesteuert wird.

2. Bearbeitungsvorrichtung für Besäumungsstreifen eines Metallbandes nach Anspruch 1, wobei die Rotation des Rotors (80) in dem Zerschneider (8) auf der Basis der Umfangsgeschwindigkeit eines Schneidmessers (3) in der Metallband-Schlitzmaschine (3a) derart gesteuert wird, daß die Schneidlänge des Besäumungsstreifens (11) nicht größer als der kleinste Innendurchmesser jeder der luftdurchströmten Leitungen (5a, 5b) am hinteren Ende des Zerschneiders (8) ist.

## Revendications

1. Dispositif de traitement des chutes de rive provenant d'un refendeur de bandes métalliques, comprenant :
des conduits pneumatiques (5a, 5b) servant à guider une longue chute de rive (11),
une soufflante (5) située sur le trajet dudit conduit pneumatique (5a),
un collecteur de chutes (6) prévu à l'extrémité du conduit pneumatique (5b) et
une presse à chutes (7) raccordée au collecteur de chutes (6),
caractérisé en ce que le dispositif comprend en outre :
une cisaille à chutes (8) qui sert à découper d'une manière continue la chute de rive (11) à une cadence préfixée et est prévue sur le trajet du conduit pneumatique (5a) et disposée en amont de la soufflante (5),
l'entraînement de la cisaille à chutes (8) étant commandé sur la base de la vitesse linéaire d'un refendeur de bandes métalliques (3a), la cisaille à chutes (8) comprenant un rotor (80), comportant une ou plusieurs parties de coupe rotatives prévues sur la périphérie extérieure (82) parallèlement à un axe d'arbre rotatif, un carter (83), comportant une ouverture d'introduction (84) et une ouverture d'évacuation (85) suivant la direction de passage des conduits pneumatiques (5a, 5b) et recevant à rotation le rotor (80), de façon telle que les parties de coupe rotatives (82) recoupent la direction de passage des conduits pneumatiques (5a, 5b), et une partie de coupe fixe (86) prévue du côté de l'ouverture d'introduction (84) du carter (83), de façon telle que les parties de coupe rotatives (82) fassent face à la partie de coupe fixe et soient amenées en contact avec celle-ci, d'une manière répétée, ou en voisinage étroit avec la partie de coupe fixe, et la rotation du rotor (81) est commandée sur la base de la vitesse linéaire du refendeur de bandes métalliques (3a).

2. Dispositif de traitement de chutes de rive provenant d'un refendeur de bandes métalliques suivant la revendication 1, dans lequel la rotation du rotor (80) dans la cisaille à chutes (8) est commandée sur la base de la vitesse périphérique d'une lame de coupe (3) située dans le refendeur de bandes métalliques (3a), de façon telle que la longueur de coupe de la chute de rive (11) ne soit pas supérieure au diamètre intérieur minimal de chacun des conduits pneumatiques (5a, 5b) en aval de la cisaille à chutes (8).
